## Europäisches Patentamt

## European Patent Office

## Office européen des brevets

(11) Veröffentlichungsnummer : **0 089 974**
**B1**

(12) **EUROPÄISCHE PATENTSCHRIFT**

(45) Veröffentlichungstag der Patentschrift :
21.11.85

(21) Anmeldenummer : 82902815.8

(22) Anmeldetag : 29.09.82

(86) Internationale Anmeldenummer :
PCT/EP 82/00218

(87) Internationale Veröffentlichungsnummer :
WO/8301348 (14.04.83 Gazette 83/09)

(51) Int. Cl.⁴ : **H 01 S  3/03**, H 01 S  3/045,
H 01 S  3/097

(54) **LASERANORDNUNG.**

(30) Priorität : 29.09.81 DE 3138622

(43) Veröffentlichungstag der Anmeldung :
05.10.83 Patentblatt 83/40

(45) Bekanntmachung des Hinweises auf die Patenterteilung : 21.11.85 Patentblatt 85/47

(84) Benannte Vertragsstaaten :
AT BE CH DE FR GB LI NL

(56) Entgegenhaltungen :
DE-A- 2 925 829
GB-A- 2 020 890
GB-A- 2 041 634
US-A- 3 795 838
US-A- 4 099 143
US-A- 4 274 065
Journal of Physics E - Scientific Instruments, vol. 14,
no. 3, March 1981, (Dorking, GB), S. Howells et al. "A
medium PRF UV preionised TEA CO2 laser", pages
293-295

(73) Patentinhaber : Battelle-Institut e.V.
Am Römerhof 35 Postfach 900 160
D-6000 Frankfurt/Main 90 (DE)

(72) Erfinder : GÜRS, Karl
Weissdornweg 23
D-6236 Eschborn 2 (DE)
Erfinder : BECK, Rasmus
Nachtigallenstrasse 62
D-6078 Neu Isenburg (DE)

(74) Vertreter : Rupprecht, Klaus, Dipl.-Ing.
Am Römerhof 35
D-6000 Frankfurt (Main) 90 (DE)

## Beschreibung

Die Erfindung betrifft eine Laseranordnung nach dem Gastransport-Prinzip gemäß dem ersten Teil des Anspruchs 1. Eine derartige Laseranordung ist aus Journal of Physics E-Scientific Instruments, Vol. 14, no. 3, März 1981, S. 293-295 bekannt. Ferner ist aus der GB-A-2 020 890 eine Laseranordnung mit spiralförmigen Gasfluß bekannt, bei der die Gehäusewandung gekühlt ist.

Leistung, Verstärkung und Wirkungsgrad der Moleküllaser, insbesondere der $CO_2$-Laser, nehmen mit steigender Temperatur im Lasergas ab. Die Abnahme der Leistungsfähigkeit beruht darauf, daß mit zunehmender Temperatur die Linienbreite größer wird, die Anregungsenergie sich auf eine zunehmende Zahl von Rotationslinien verteilt, die Zahl der desaktivierenden Stöße zunimmt und die Besetzung des Laserendniveaus durch thermische Anregung zunimmt und damit die Inversion abnimmt (K. Gürs, « Laser 75 Optoelectronics », Conference proceedings, S. 30-37).

Aus diesem Grund wurden bereits Methoden entwickelt, die Wärme mit dem Lasergas durch Umwälzen und Kühlen des Gases abzuführen. Geeignete Laser bestehen aus einem aktiven Bereich, in dem das Gas angeregt wird, mit angrenzendem oder integriertem optischen Resonator, aus dem Gasführungssystem mit eingebautem Kühler und einer Pumpe. Da große Wärmemengen abzuführen sind, müssen große Gasmengen umgepumpt werden. Die entsprechenden Laser sind groß und aufwendig, ihre Einsatzmöglichkeit ist wegen ihrer Unhandlichkeit begrenzt.

Der vorliegenden Erfindung, wie sie in den Ansprüchen gekennzeichnet ist, liegt daher die Aufgabe zugrunde, die oben genannten Nachteile der bekannten Gastransport- oder Konvektions-Laser zu beseitigen.

Das erfindungsgemäße Prinzip beruht darauf, daß die Aufteilung des Lasers in Teile mit definierter Funktion teilweise aufgehoben wird bzw. verschiedene Funktionen völlig integriert werden. Dies führt dazu, daß z. B. die das Gas bewegenden Bauteile nicht mehr als Pumpe zu identifizieren sind. Damit wird der Boden der Anwendung bekannter Bauelemente und Konstruktionsprinzipien verlassen.

Im folgenden wird die Erfindung anhand von Zeichnungen, die lediglich drei Ausführungswege darstellen, näher erläutert. Es zeigen in schematischer Vereinfachung

Figuren 1 a) und b) im Schnitt senkrecht zur Rotorachse eine erfindungsgemäße Laseranordnung, bei der das Lasergas parallel zur Resonatorachse durch den Laserresonator strömt, mit zwei Möglichkeiten zur Ausbildung der Entladungskammer :

Figur 2 eine Ausführungsform, bei der mehrere Laseranordnungen gemäß Fig. 1 zusammengefügt sind ;

Figur 3 im Schnitt senkrecht zur Rotorachse eine weitere Ausführungsform der erfindungsgemäßen Laseranordnung, bei der das Lasergas senkrecht zur Resonatorachse durch den Laserresonator strömt und

Figur 4 die in Fig. 3 dargestellte Laseranordnung im Längsschnitt.

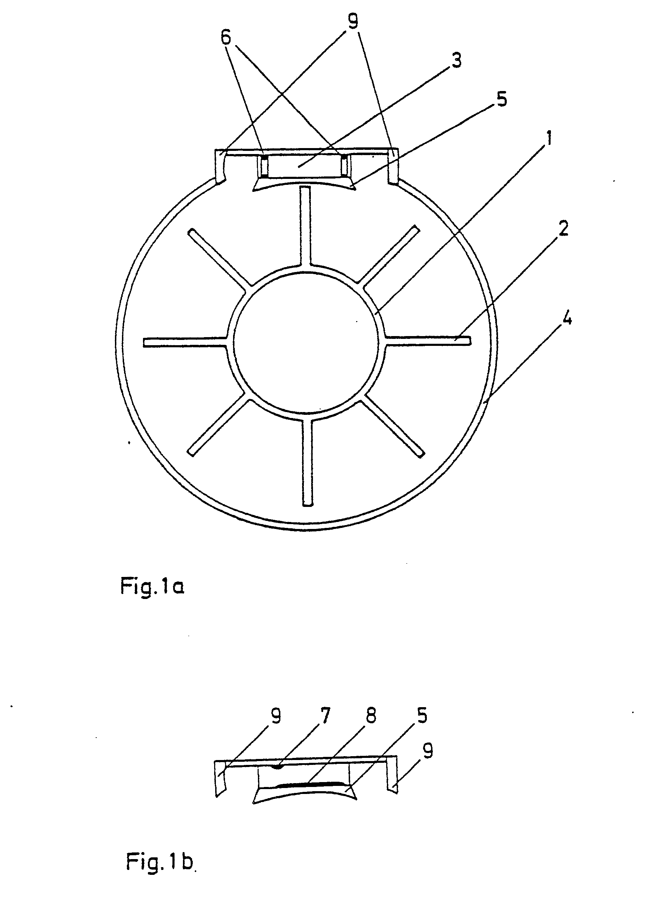

Bei der in Fig. 1 a) dargestellten Ausführungsform wird das Lasergas durch den Rotor 1 mit radial angeordneten schmalen Schaufeln 2 bewegt. Die Schaufeln können dabei gemäß den aerodynamischen Prinzipien geeignet geformt und in bekannter Weise gegenüber der radialen Richtung etwas geneigt sein. Die Breite der Schaufeln 2 entspricht etwa dem Durchmesser einer Entladungskammer 3. Das aus dem Rotor 1 und Schaufelrad 2 bestehende Gasumwälzsystem füllt das Innere des im wesentlichen zylindrischen Gehäuses 4 weitgehend aus. Der Durchmesser des Gehäuses ist demzufolge größer als dessen Breite in Richtung der Achse. Das Lasergas wird in dem Zwischenraum zwischen den Schaufeln und der Gehäusewandung mitbewegt.

Die Entladungskammer 3 wird an einer Seite der Gehäusewandung angeordnet. Sie wird im Fig. la dargestellten Fall durch ein Formteil 5 mit einer kreiszylindrischen Bohrung und zwei ringförmigen Elektroden 6 gebildet. Die Elektroden können aber auch außerhalb des Laserresonators eingesetzt werden. Die Umlenkung des Lasergases mit Strömung durch die Kammer 3 wird durch geeignete Formgebung insbesondere an der Eintritts- und Austrittsöffnung unterstützt. Es kommen jedoch auch, wir in Fig. 1b dargestellt, Entladungskammern mit quadratischem oder rechteckigem inneren Querschnitt und zwei an gegenüberliegenden Flächen des Formteils 5 angeordneten, flachen, strömungstechnisch günstig geformten Elektroden 7 und 8 in Betracht. Die Elektroden 7 und 8 müssen nicht genau gegenüberliegen. Es ist vorteilhaft, daß eine Elektrode in Längsrichtung ausgedehnter ist.

Die Laserspiegel 9 sind senkrecht auf der Achse der Entladungskammer 3 angeordnet. Anstelle der Spiegel 9 können auch Brewster-Fenster angebracht und externe Spiegel verwendet werden. Vorteilhaft ist dabei, daß die Brewster-Fenster durch die Schräge eine gute Gasumlenkung durch die Entladungskammer hindurch gewährleisten.

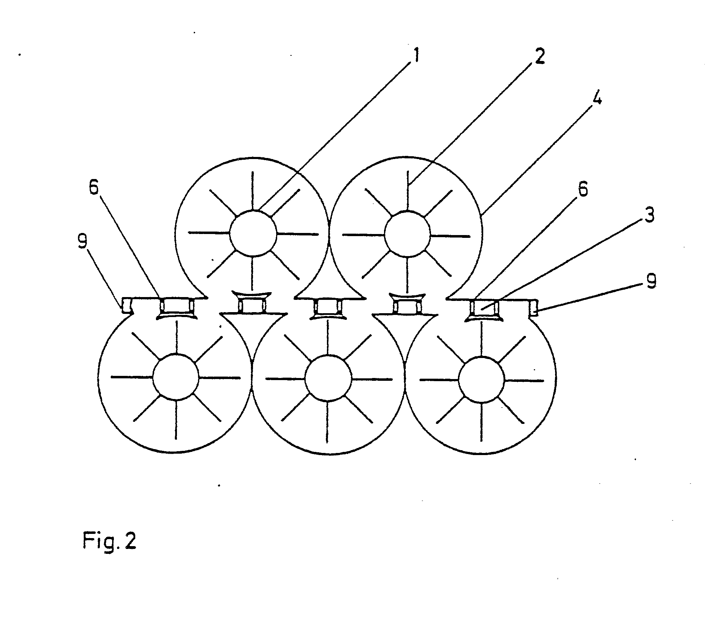

Vorteil solcher Systeme, bei denen das Gas in Richtung der Achse durch den Laserresonator strömt, ist die im allgemeinen hohe Strahlqualität. Um die Ausgangsleistung zu erhöhen, können mehrere dieser Systeme jeweils mit dem Resonator aneinander angeschlossen werden. Aus Platzgründen empfiehlt es sich dabei, aufeinanderfolgende Systeme um die Achse des Laserresonators zu verdrehen. In Fig. 2 sind fünf Systeme kombiniert.

Die Zahl der Einzelsysteme richtet sich nach der gewünschten Laserleistung. Beispielsweise kann bei einem Durchmesser der Entladungskammer von 4 cm und einer Strömungsgeschwindigkeit von 160 m/s pro Einzelsystem eine Leistung von mehr 200 W erzeugt werden. Fünfstufige Anordnungen nach Art der Fig. 2 liefern daher bei einer möglichen Gesamtbaulänge von ca. 1 m eine Laserleistung hoher Strahlqualität von mehr als 1 kW.

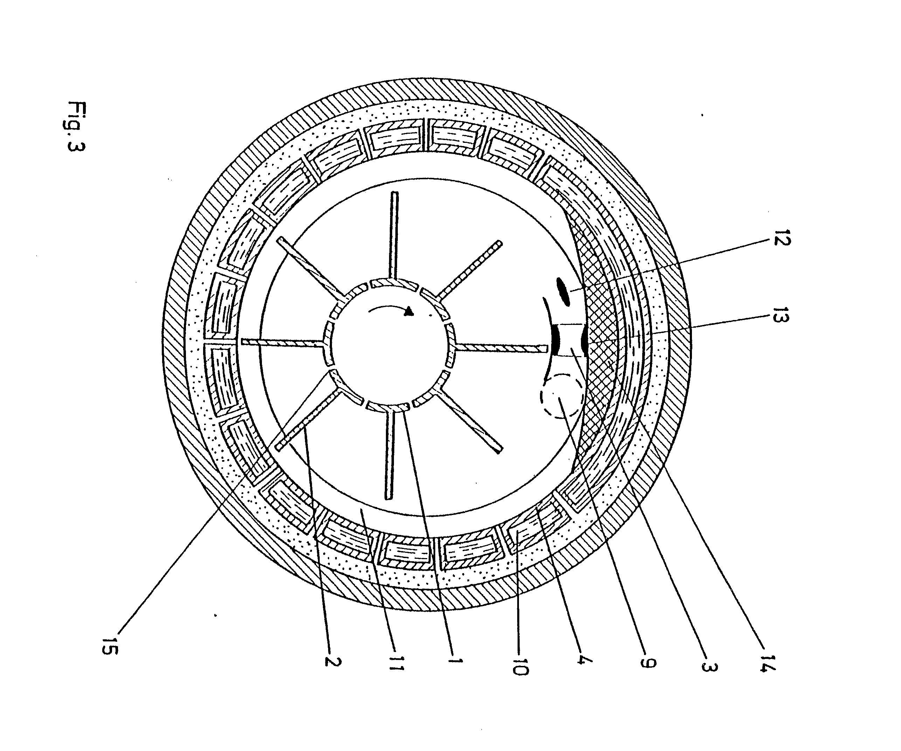

Bei der in Fig. 3 dargestellten Anordnung wird das Lasergas ebenfalls durch ein Rotorteil 1 mit radial angeordneten Schaufeln 2 bewegt. Der Rotor füllt das Innere des Gehäuses 4 weitgehend aus. Die Rotorschaufeln 2 erstrecken sich einerseits bis zu der Gehäusewandung und andererseits bis zu dem entlang der Gehäusewandung angebrachten Anregungssytem mit Entladungskammern 3. Die Gehäusewandung wird von außen durch die Kühlwassereinleitung 10 abgekühlt und trägt zur besseren Kühlung des Lasergases ferner Kühlrippen 11. Diese Kühlrippen sind senkrecht zur Rotorachse angeordnet und erstrecken sich in Strömungsrichtung des Lasergases.

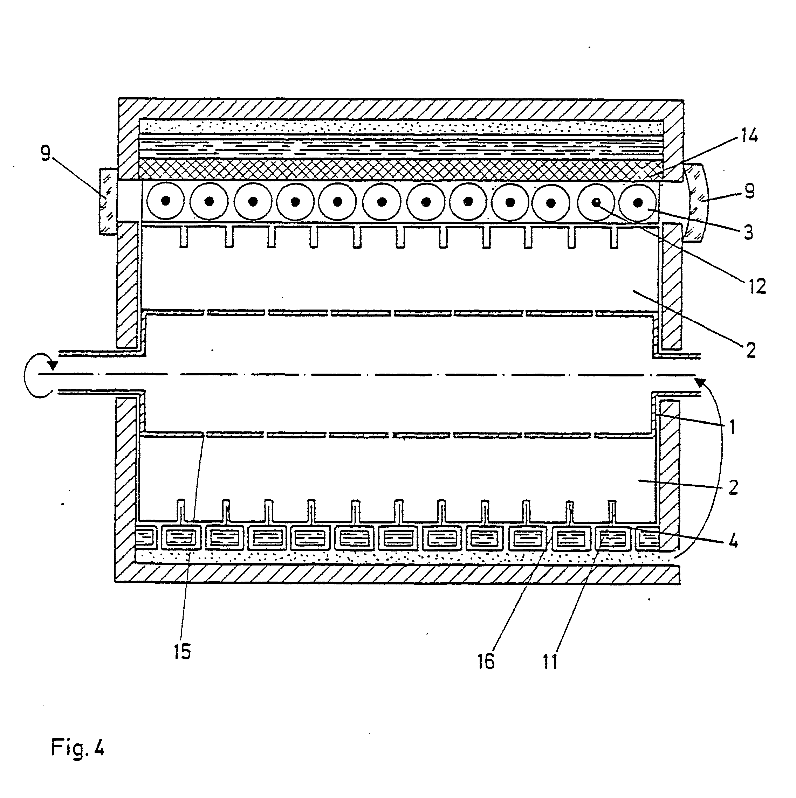

Wie aus Fig. 4 hervorgeht, besteht das Anregungssystem hier aus einer Reihe von Entladungskammern 3, die mit je einer Mittenelektrode 12 und einer ringförmigen Außenelektrode 13 versehen sind. Das durch den Rotor 1 bewegte und gekühlte Lasergas strömt nach der Anregung in den optischen Resonator und gibt dort seine Anregungsenergie an die Laserschwingung ab. Anstelle einfacher sphärischer Laserspiegel 9 können auch Spiegelsysteme für einen gefalteten Strahlengang verwendet werden.

Die nebeneinander angeordneten Entladungskammern 3 werden an einem Halter 14 oder direkt an der Gehäusewandung befestigt, dessen Enden entsprechend den aerodynamischen Prinzipien geformt sind, damit eine eventuelle Verwirbelung des strömenden Gases vermieden wird.

Die Rotorschaufeln 2 tragen Einschnitte bzw. Aussparungen, damit sie auch zwischen die Kühlrippen 11 greifen und dort das Lasergas bewegen können, so daß eine effektive Kühlung des Lasergases gewährleistet wird. Eine mögliche Form der Anordnung der Rotorschaufeln wird in Fig. 4 verdeutlicht.

Die Strömungsverhältnisse und die Kühlung können noch dadurch verbessert werden, daß der Rotor 1 hohl ausgebildet ist und das Lasergas durch kleine Öffnungen 15 im Rotor, die aus Figur 3 ersichtlich sind, in den Innenraum des Gehäuses eintreten und diesen durch kleine Öffnungen 16 an der Gehäusewandung wieder verlassen kann. Das so aus dem Gehäuse austretende Lasergas wird dann axial in den Rotor 1 zurückgeführt. Dieser Kreislauf wird durch die Zentrifugalkraft aufrechterhalten. Eine Pumpe wird nicht benötigt.

Eine mögliche Variation der erfindungsgemäßen Laseranordnung besteht darin, daß das Anregungssytem aus zwei oder mehreren Reihen von Entladungskammern gebildet wird. Bei Vorhandensein von zwei Reihen von Entladungskammern könnten diese z. B. an der Gehäusewandung gegenüberliegend angebracht werden, so daß sich der Rotor zwischen beiden Reihen dreht. Bei einer solchen Ausführungsform kann ein Gehäuse verwendet werden, dessen Querschnitt elliptisch geformt ist. Die Entladungskammern können dann an den Seiten der Hauptachse angeordnet werden, so daß die Rotorschaufeln an den Seiten der Nebenachse noch immer der gekühlten Gehäusewandung angrenzen können.

Das erfindungsgemäße Lasersystem hat beispielsweise eine Länge von 1 m. Die Querschnittsfläche der Entladungskammern beträgt insgesamt 0,05 m². In den Entladungskammern kann die Strömungsgeschwindigkeit bis 160 m/s betragen. Das bedeutet, daß eine Gasmenge von 8 m³/s durch die Entladungskammern fließt. Ein geeignetes Gasgemisch hat die Zusammensetzung $CO_2 : N_2 : He = 1 : 7 : 3$. Ein günstiger Druckbereich ist 50 bis einige 100 Torr (6,65 bis 13,3 kPa). Unter diesen Bedingungen liefert das System mit 1 m Länge des inneren Gehäuses eine Leistung von 8 kW. Größere Leistungen können erzielt werden, wenn zwei Reihen von Entladungskammern vorhanden sind oder wenn man die Abmessungen des Systems vergrößert oder mehrere Systeme hintereinander schaltet.

## Patentansprüche

1. Laseranordnung nach dem Gastransport-Prinzip, bei der das Lasergas in einem Gehäuse durch den Laserresonator strömt, das Gehäuse ein Gasumwälzsystem und ein oder mehrere Anregungssysteme einschließt, das Gasumwälzsystem einen Rotor (1) mit radialen, im wesentlichen quer zur Strömungsrichtung des Lasergases angeordneten Schaufeln (2) aufweist und bei der das Anregungssystem (3) an der Gehäusewandung angeordnet ist und vom Lasergas durchströmt wird, dadurch gekennzeichnet, daß der Rotor das Gehäuseinnere außerhalb des von dem oder den Anregungssystemen eingenommenen Raumes ausfüllt, derart daß sich die Rotorschaufeln entweder bis zur Gehäusewand oder bis zu dem oder den Anregungssystemen erstrecken, wobei das Lasergas in dem Zwischenraum zwischen den Schaufeln (2) und der Gehäusewandung mitbewegt wird, und daß die Gehäusewandung gekühlt ist.

2. Laseranordnung nach Anspruch 1, dadurch gekennzeichnet, daß das Anregungssystem (3) bei entsprechend geringer Ausdehnung in Richtung der Rotorachse nur eine Entladungskammer aufweist, die als optischer Resonator ausgebildet ist, wobei die Resonatorachse parallel zur Strömungsrichtung des Lasergases angeordnet ist.

3. Laseranordnung nach Anspruch 2, dadurch gekennzeichnet, daß die Resonatorräume mehrerer Gehäuse hintereinander zusammengefügt und durch ein gemeinsames Spiegelpaar abgeschlossen sind.

4. Laseranordnung nach Anspruch 3, dadurch gekennzeichnet, daß jeweils aufeinanderfolgende Gehäuse um die Resonatorachse gegeneinander verdreht sind.

5. Laseranordnung nach Anspruch 1, dadurch gekennzeichnet, daß bei entsprechend großer Ausdehnung des Gehäuses in Richtung der Rotorachse mehrere Entladungskammern (3) nebeneinander parallel zur Rotorachse angeordnet sind, denen ein gemeinsamer Resonator zugeordnet ist, wobei die Resonatorachse senkrecht zur Strömungsrichtung des Lasergases verläuft.

6. Laseranordnung nach Anspruch 5, dadurch gekennzeichnet, daß alle oder jeweils einige Entladungskammern zu einem größeren Anregungssystem mit entsprechend ausgedehnten Elektroden zusammengefaßt sind.

7. Laseranordnung nach einem der Ansprüche 1 bis 6, dadurch gekennzeichnet, daß das Anregungssystem mit Brewster-Fenstern abgeschlossen ist und externe Laserspiegel vorgesehen sind.

8. Laseranordnung nach einem der Ansprüche 1 bis 7, dadurch gekennzeichnet, daß an den entgegengesetzten Seiten der Gehäusewandung je ein Anregungssystem vorgesehen ist, wobei der Rotor sich zwischen beiden Anregungssystemen befindet.

9. Laseranordnung nach Anspruch 8, dadurch gekennzeichnet, daß das Gehäuse (4) einen elliptischen Querschnitt besitzt und die Anregungssysteme an den Seiten der Hauptachse des Gehäusequerschnitts angeordnet sind.

10. Laseranordnung nach einem der Ansprüche 1 bis 9, dadurch gekennzeichnet, daß der Rotor (1) hohl ist, daß der Rotorzylinder und die Gehäusewandung mit Öffnungen (15, 16) versehen sind und daß das aus dem Gehäuse (4) austretende Lasergas axial in den Rotor (1) zurückführbar ist.

11. Laseranordnung nach einem der Ansprüche 1 bis 10, dadurch gekennzeichnet, daß zur Kühlung des Lasergases senkrecht zur Rotorachse angeordnete Kühlrippen (11) vorgesehen sind, die sich in Strömungsrichtung des Lasergases erstrecken und in Ausnehmungen der Rotorschaufeln eingreifen.

**Claims**

1. Laser apparatus based on gas transport principle, in which the laser gas flows through the laser resonator inside a casing, said casing enclosing a gas circulation system and one or more excitation systems, the gas circulation system comprising a rotor (1) with radial blades (2) which are arranged essentially normal to the direction of flow of the laser gas and the excitation system (3) through which laser gas and the excitation system (3) through which laser gas flows being arranged at the wall of the casing characterized in that the rotor fills the inside of the casing excluding the space of excitation system or systems such that the rotor blades extend either towards the wall of the casing or towards the excitation system of systems whereby the laser gas is moved in the space between the blades (2) and the wall of the casing which is cooled.

2. Laser arrangement as claimed in claim 1 wherein the excitation system (3), which has a small extension in the direction of the axis of rotor, consists of only one discharge chamber, said discharge chamber being formed as optical resonator, and the resonator axis being arranged parallel to the direction of flow of the laser gas.

3. Laser arrangement as claimed in claim 2 wherein the resonators of several casing are connected in series and closed by a common pair of mirrors.

4. Laser arrangement as claimed in claim 3 wherein successive casings are turned with respect to each other around the resonator axis.

5. Laser arrangement as claimed in claim 1 wherein the extension in the direction of the rotor axis is comparatively large and wherein several discharge chambers (3) are arranged side by side parallel to the rotor axis and one common resonator is assigned to all the discharge chambers, the resonator axis being arranged normal to the direction of flow of the laser gas.

6. Laser arrangement as claimed in claim 5 wherein all or a specific number of the discharge chambers are combined in one larger excitation system with electrodes of corresponding extended size.

7. Laser arrangement as claimed in any of the claims 1 to 6 wherein the excitation system is closed by Brewster plates and external laser mirrors are provided.

8. Laser arrangement as claimed in any of the claims 17 wherein one excitation system is provided on each of two opposite walls of the casing and the rotor is arranged between the two excitation systems.

9. Laser arrangement as claimed in claim 8 wherein the casing (4) has an elliptic cross section and the excitation systems are arranged on opposite sides of the main axis of the casing.

10. Laser arrangement as claimed in any of the claims 1 to 9 wherein the rotor (1) is hollow and the rotor cylinder and the wall of the casing are provided with openings (15, 16) and the laser gas can be recirculated from the casing (4) axially into the rotor (1).

11. Laser arrangement as claimed in any of the claims 1 to 10 wherein cooling fins (11) for cooling the laser gas are arranged normal to the rotor axis an extend in the direction of flow of the . laser gas.

**Revendications**

1. Dispositif laser fonctionnant d'après le principe à circulation de gaz, notamment $CO_2$ dans lequel le gaz laser traverse, dans un boîtier, le résonateur du laser, le boîtier renferme un système de circulation de gaz et un ou plusieurs systèmes d'excitation, le système de circulation de gaz comporte un rotor (1) portant des ailettes (2) radiales, disposées essentiellement perpendiculairement à la direction de l'écoulement du gaz laser, et dans lequel le système d'excitation (3) est disposé sur la paroi du boîtier et est traversé par le gaz laser, dispositif caractérisé en ce que le rotor remplit l'intérieur du boîtier à l'extérieur de

7 0 089 974 8

l'espace occupé par le ou les systèmes d'excitation, de façon telle que les ailettes du rotor s'étendent, soit jusqu'à la paroi du boîtier, soit jusqu'au ou aux systèmes d'excitation, le gaz laser étant entraîné dans l'espace intermédiaire qui sépare les ailettes (2) de la paroi du boîtier, et en ce que la paroi du boîtier est refroidie.

2. Dispositif laser suivant la revendication 1, caractérisé en ce que le système d'excitation (3) présente, dans la direction de l'axe du rotor, une seule chambre de décharge, en ayant une extension d'une faible dimension appropriée, cette chambre de décharge étant réalisée sous la forme d'un résonateur optique, l'axe du résonateur étant disposé parallèlement à la direction de l'écoulement du gaz laser.

3. Dispositif laser suivant la revendication 2, caractérisé en ce que les chambres de résonance de plusieurs boîtiers sont assemblées à la suite les unes des autres et sont fermées par une paire de miroirs communs.

4. Dispositif laser suivant la revendication 3, caractérisé en ce que les boîtiers successifs sont chaque fois décalés l'un par rapport à l'autre sur l'axe du résonateur.

5. Dispositif laser suivant la revendication 1, caractérisé en ce que si l'on a donné au boîtier une extension suffisamment grande dans la direction de l'axe du rotor, plusieurs chambres de décharge (3) sont disposées côte à côte, parallèlement à l'axe du rotor, un résonateur commun leur étant adjoint, l'axe du résonateur s'étendant perpendiculairement à la direction de l'écoulement du gaz laser.

6. Appareil laser suivant la revendication 5, caractérisé en ce que toutes, ou, suivant le cas, quelques chambres de décharge, sont assemblées en un système d'excitation plus important avec des électrodes d'une dimension appropriée.

7. Appareil laser suivant l'une des revendications 1 à 6, caractérisé en ce que le système d'excitation est fermé avec des fenêtres Brewster, et qu'il est prévu un miroir laser externe.

8. Appareil laser suivant l'une des revendications 1 à 7, caractérisé en ce qu'il est prévu sur chacune des faces opposées de la paroi du boîtier, un système d'excitation, le rotor se trouvant entre les deux systèmes d'excitation.

9. Appareil laser suivant la revendication 8, caractérisé en ce que le boîtier (4) possède une section transversale elliptique, et que les systèmes d'excitation sont disposés sur les côtés de l'axe principal de la section du caisson.

10. Appareil laser suivant l'une des revendications 1 à 9, caractérisé en ce que le rotor (1) est creux, que le cylindre rotor et la paroi du boîtier sont pourvus d'ouvertures (15, 16), et que le gaz laser sortant du boîtier (4) peut être ramené axialement dans le rotor (1).

11. Appareil laser suivant l'une des revendications 1 à 10, caractérisé en ce que pour refroidir le gaz laser, on prévoit des nervures de refroidissement (11) disposées perpendiculairement à l'axe du rotor, qui s'étendent dans le sens de l'écoulement du gaz laser, et qui agissent dans des évidements des ailettes du rotor.

Fig.1a

Fig.1b

Fig. 2

Fig. 3

Fig. 4